# EUROPÄISCHE PATENTSCHRIFT

(11) **EP 3 414 443 B1**
(45) Veröffentlichungstag und Bekanntmachung des Hinweises auf die Patenterteilung: **19.02.2020**
(21) Anmeldenummer: 16828912.2
(22) Anmeldetag: 15.12.2016
(51) Int. Cl.: F02D 41/30, F02D 19/08, F02D 19/10, F02D 35/02, F02D 41/00

(54) **DUAL-FUEL-BRENNKRAFTMASCHINE**
DUAL-FUEL INTERNAL COMBUSTION ENGINE
MOTEUR À COMBUSTION INTERNE BI-CARBURANT

(30) Priorität: 29.12.2015 AT 511112015
(43) Veröffentlichungstag der Anmeldung: 19.12.2018
(73) Patentinhaber: Innio Jenbacher GmbH & Co OG, 6200 Jenbach (AT)
(72) Erfinder: HILLEBRECHT, Michael, 18000 Praha 8 - Liben (CZ); IMHOF, Dino, 5400 Baden (CH); TINSCHMANN, Georg, 6130 Schwaz (AT)
(74) Vertreter: Torggler & Hofinger Patentanwälte
(86) Internationale Anmeldenummer: PCT/AT2016/060128
(87) Internationale Veröffentlichungsnummer: WO 2017/112968

(56) Entgegenhaltungen:
- EP-A1- 2 743 482
- US-A1- 2014 366 839
- US-A1- 2015 219 027

## Beschreibung

Die vorliegende Erfindung betrifft eine Dual-Fuel-Brennkraftmaschine mit den Merkmalen des Oberbegriffs des Anspruchs 1 und ein Verfahren zum Umschalten einer Dual-Fuel-Brennkraftmaschine mit den Merkmalen des Oberbegriffs des Anspruchs 8.

Dual-Fuel-Brennkraftmaschinen werden typischerweise in zwei Betriebsmodi betrieben. Dabei unterscheidet man einen Betriebsmodus mit primär flüssiger Kraftstoffzufuhr (kurz "Flüssigbetrieb"; im Falle der Verwendung von Diesel als flüssigem Kraftstoff auch "Dieselbetrieb" genannt) und einen Betriebsmodus mit primär gasförmiger Kraftstoffzufuhr, bei welchem der flüssige Kraftstoff als Pilotkraftstoff zum Initiieren der Verbrennung dient ("Gasbetrieb", auch als "Pilotbetrieb" oder "Zündstrahlbetrieb" bezeichnet). Als Beispiel für den flüssigen Kraftstoff sei Diesel genannt. Es könnte auch Schweröl oder ein anderer selbstzündfähiger Kraftstoff sein. Als Beispiel für den gasförmigen Kraftstoff sei Erdgas genannt. In Frage kommen noch andere gasförmige Kraftstoffe wie Biogas etc.

Im Pilotbetrieb wird eine geringe Menge an flüssigem Kraftstoff als sogenannte Piloteinspritzung in einen Brennraum einer Kolben-Zylindereinheit eingebracht. Durch die zum Einspritzzeitpunkt herrschenden Bedingungen entzündet sich der eingebrachte flüssige Kraftstoff und zündet ein im Brennraum der Kolben-Zylindereinheit vorliegendes Gemisch aus gasförmigem Kraftstoff und Luft. Die Menge an flüssigem Kraftstoff einer Piloteinspritzung beträgt typischerweise 0,5 - 5 % der gesamten, der Kolben-Zylindereinheit in einem Arbeitszyklus der Brennkraftmaschine zugeführten Energiemenge.

Zur Begriffsklärung wird definiert, dass die Brennkraftmaschine im Pilotbetrieb oder im Flüssigbetrieb betrieben wird. Bezüglich der Regeleinrichtung wird der Pilotbetrieb der Brennkraftmaschine als Pilotmodus bezeichnet, ein Flüssigbetrieb der Brennkraftmaschine wird bezüglich der Regeleinrichtung als Flüssigmodus bezeichnet. Daneben gibt es noch einen Mischbetrieb.

Die Substitutionsrate gibt an, welcher Anteil der der Brennkraftmaschine zugeführten Energie in Form des gasförmigen Kraftstoffes zugeführt wird. Angestrebt werden Substitutionsraten zwischen 98 und 99,5 %. Derart hohe Substitutionsraten erfordern eine Auslegung der Brennkraftmaschine beispielsweise hinsichtlich des Verdichtungsverhältnisses wie sie der eines Gasmotors entspricht. Die teilweise gegensätzlichen Anforderungen an die Brennkraftmaschine für einen Pilotbetrieb und einen Flüssigbetrieb führen zu Kompromissen in der Auslegung, beispielsweise hinsichtlich des Kompressionsverhältnisses.

Die US 7,913,673 beschreibt eine gattungsgemäße Brennkraftmaschine und ein gattungsgemäßes Verfahren. Die Umschaltung erfolgt unter Auswertung der Signale eines Klopfsensors so nahe wie möglich an der Klopfgrenze, damit die Umschaltung so schnell wie möglich erfolgen kann.

Die WO 2013075234 beschreibt eine Regeleinheit für eine Dual-Fuel-Brennkraftmaschine. Hierbei wird näher beschrieben, dass das Gas-Diesel-Verhältnis im Normalbetrieb durch eine Regeleinheit in Abhängigkeit von einem gemessenen Parameter berechnet werden kann und in Folge durch die Regeleinheit die tatsächlich eingespritzte Diesel- und Gasmenge dem berechneten Wert angepasst werden kann.

Ferner offenbart die EP 2 743482 ein System zur Klopfregelung in einer Gas- oder Dual-Fuel Brennkraftmaschine, in dem die Klopfhäufigkeit eines ersten Betriebsmodus berechnet wird, um zu bestimmen, ob die Brennkraftmaschine in einem zweiten Betriebsmodus betrieben werden soll.

In der US 2015/219027 wird auch ein System zur Klopfregelung einer Dual-Fuel Brennkraftmaschine beschrieben, in dem die Klopfhäufigkeit aus dem Zylinderdruck ermittelt wird, und bei Auftreten von Klopfen die eingespritzten Mengen an gasförmigem und flüssigem Kraftstoffen angepasst werden.

Aufgabe der Erfindung ist die Bereitstellung einer gattungsgemäßen Dual-Fuel-Brennkraftmaschine und eines gattungsgemäßen Verfahrens zum Umschalten einer Dual-Fuel-Brennkraftmaschine, bei welchen die Umschaltung noch schneller als beim Stand der Technik erfolgen kann.

Diese Aufgabe wird durch eine Dual-Fuel-Brennkraftmaschine mit den Merkmalen des Anspruchs 1 und ein Verfahren zum Umschalten einer Dual-Fuel-Brennkraftmaschine mit den Merkmalen des Anspruchs 8 gelöst. Vorteilhafte Ausführungsformen der Erfindung sind in den abhängigen Ansprüchen definiert.

Klopfen, welches auftritt, wenn die Substitutionsrate relativ hoch ist (z. B. größer als 70 %) wird durch das bei dieser Substitutionsrate mit einem hohen Energieanteil im Brennraum vorliegende Gas-Luft-Gemisch verursacht. Dieses ist aufgrund der Verbrennungscharakteristik des Gas-Luft-Gemisches weit nachteiliger als Klopfen, welches bei einer relativ niedrigen Substitutionsrate auftritt (z. B. weniger als 60 %), da der Energieanteil des Gas-Luft-Gemisches bei dieser Substitutionsrate gering ist.

Die Erfindung berücksichtigt bei der Umschaltung nicht nur die Signale des Sensors, welche charakteristisch sind für ein im zumindest einen Brennraum auftretendes Klopfen (im folgenden kurz "Klopfsignal"), sondern berücksichtigt zusätzlich die in den zumindest einen Brennraum eingespritzte Menge an flüssigem Kraftstoff.

Tritt z. B. Klopfen bei einer relativ kleinen eingespritzten Menge an flüssigem Kraftstoff auf, findet das Klopfen bei einem Gas-Luft-Gemisch mit hohem Energieanteil statt und es müssen Maßnahmen getroffen werden, welche das Klopfen reduzieren (falls dieses über einem Klopfschwellwert liegt), was zu einer Verlangsamung der Umschaltung führt.

Tritt hingegen Klopfen bei einer relativ großen eingespritzten Menge an flüssigem Kraftstoff auf, ist dieses als weniger gefährlich einzustufen. Es müssen entweder keine oder nur weniger massive Maßnahmen getroffen werden, welche das Klopfen reduzieren, oder diese Maßnahmen müssen erst gesetzt werden, wenn sich das Klopfen intensiviert. Die Verlangsamung der Umschaltung tritt so nicht oder nicht so massiv oder erst später auf.

Erfindungsgemäß ist vorgesehen, dass die Regeleinrichtung dazu ausgebildet ist, bei Auftreten von Klopfen über einem vorgegebenen ersten Klopfschwellwert klopfreduzierende Maßnahmen vorzunehmen, falls die eingespritzte Menge an flüssigem Kraftstoff unter einem vorgegebenen Flüssigkraftstoffschwellwert liegt und/oder, dass die Regeleinrichtung dazu ausgebildet ist, bei Auftreten von Klopfen über einem vorgegebenen ersten Klopfschwellwert klopfreduzierende Maßnahmen nicht oder nur eingeschränkt vorzunehmen, falls die eingespritzte Menge an flüssigem Kraftstoff über einem vorgegebenen Flüssigkraftstoffschwellwert liegt und falls das Klopfen unterhalb eines vorgegebenen zweiten Klopfschwellwert liegt. Der Flüssigkraftstoffschwellwert wird vorzugsweise als Massenwert in Abhängigkeit einer Substitutionsrate und einer Last der Brennkraftmaschine festgelegt. In diesem Sinne liegt also eine Vielzahl von Flüssigkraftstoffschwellwerten vor.

Klopfreduzierende Maßnahmen sind z. B.:
- Erhöhen einer Luftüberschusszahl des Gas-Luft-Gemisches,
- Senken einer Einlasstemperatur des Gas-Luft-Gemisches, falls dies bei der vorliegenden Luftfeuchte möglich ist, ohne dass es zu einem Auskondensieren kommt
- Verringern der Energiemenge durch Verringern der Menge an eingespritztem flüssigem Kraftstoff (diese Maßnahme kann zylinderindividuell vorgenommen werden)
- Verändern des Einspritzzeitpunktes des flüssigen Kraftstoffs nach spät (diese Maßnahme kann zylinderindividuell vorgenommen werden)

Diese Maßnahmen können einzeln oder in beliebiger Kombination vorgenommen werden.

Tritt Klopfen, welchem gegengesteuert werden muss, nur in vereinzelten Brennräumen der Brennkraftmaschine auf, ist bevorzugt vorgesehen, für diese Brennräume die Energiemenge an eingespritztem flüssigem Kraftstoff zu verringern und/oder die Einspritzzeitpunkte des flüssigen Kraftstoffs nach spät zu verändern.

Tritt Klopfen, welchem gegengesteuert werden muss, nicht nur in vereinzelten Brennräumen der Brennkraftmaschine auf, ist bevorzugt vorgesehen, alternativ oder zusätzlich zu den im vorhergehenden Absatz beschriebenen Maßnahmen die Luftüberschusszahl des Gas-Luft-Gemisches zu erhöhen oder die Einlasstemperatur des Gas-Luft-Gemischs zu senken.

Es kann vorgesehen sein, dass die Regeleinrichtung dazu ausgebildet ist, die eingespritzte Menge an flüssigem Kraftstoff aus den Größen Einspritzbeginn, Einspritzdauer, Einspritzdruck zu berechnen.

Es kann vorgesehen sein, dass die Regeleinrichtung dazu ausgebildet ist, die Auswertung der Signale des Sensors unter Berücksichtigung der zugeführten Menge an flüssigem Kraftstoff derart vorzunehmen, dass unter zusätzlicher Berücksichtigung einer momentanen Last der Brennkraftmaschine eine Substitutionsrate berechnet wird. So wird mittels der Substitutionsrate die momentane Last berücksichtigt. Dann kann vorgesehen sein, dass die Regeleinrichtung dazu ausgebildet ist, bei Auftreten von Klopfen klopfreduzierende Maßnahmen vorzunehmen, falls die Substitutionsrate größer als ein vorgegebener Substitutionsratenschwellwert ist.

Üblicherweise weist eine Brennkraftmaschine eine Vielzahl von Kolben-Zylinder-Einheiten mit Brennräumen auf. Die Erfindung kann zylinderindividuell, das heißt für jeden Zylinder unabhängig von den anderen Zylindern, durchgeführt werden.

Die Erfindung kann bevorzugt bei einer stationären Brennkraftmaschine, für Marineanwendungen oder mobile Anwendungen wie sogenannte "Non-Road-Mobile-Machinery" (NRMM) - vorzugsweise jeweils als Hubkolbenmaschine ausgebildet - eingesetzt werden. Die Brennkraftmaschine kann als mechanischer Antrieb dienen, z. B. zum Betreiben von Verdichteranlagen oder mit einem Generator zu einem Genset zur Erzeugung elektrischer Energie gekoppelt sein. Die Brennkraftmaschine weist bevorzugt eine Vielzahl von Brennräumen mit entsprechenden Einlassventilen und Injektoren auf. Die Regelung kann individuell für jeden Brennraum erfolgen.

Ein Ausführungsbeispiel der Erfindung wird anhand der Figuren diskutiert.

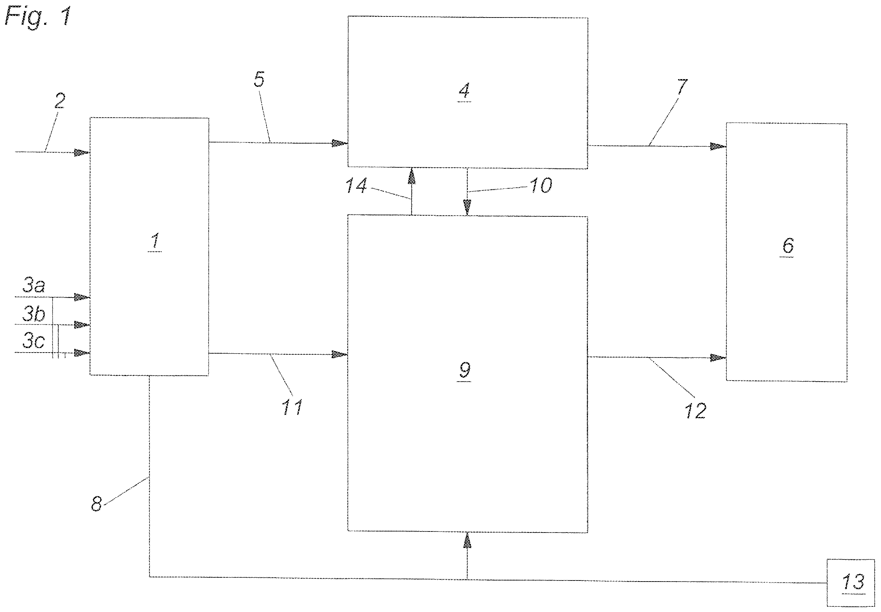

Figur 1 zeigt schematisch den logischen Aufbau einer Regeleinrichtung einer erfindungsgemäßen Brennkraftmaschine. Einem Eingangsblock 1 werden verschiedenste Messsignale der Brennkraftmaschine zugeführt, insbesondere über die hier nur summarisch dargestellte Leitung 2 diverse Betriebsdaten (Drehzahl, Drehmoment, Ladedruck, Einlasstemperatur der Luft, Gasmasse, Luftmasse, ...) und über Leitungen 3a bis 3c jene Daten, über welche die Regeleinrichtung die eingespritzte Menge an flüssigem Kraftstoff berechnen kann (Beginn der Einspritzung, Einspritzdauer, Einspritzdruck - z. B. Raildruck).

Der Eingangsblock 1 übermittelt über Leitung 5 Signale an eine Dual-Fuel-Einheit 4, welche in Abhängigkeit einer gewünschten Substitutionsrate (z. B. 90 %) die hierfür erforderlichen Betriebsparameter der Brennkraftmaschine bestimmt und anhand der Signale der Leitung 5 kontrolliert, ob die Istwerte dieser Betriebsparameter mit den Sollwerten übereinstimmen.

Die Dual-Fuel-Einheit 4 übermittelt Steuersignale an eine Verbrennungsregeleinheit 6, welche die Betriebsparameter der Brennkraftmaschine (Beginn der Einspritzung, Einspritzdauer, Einspritzdruck - z. B. Raildruck, Drehzahl, Drehmoment, Ladedruck, Einlasstemperatur der Luft, Gasmasse, Luftüberschusszahl, ...) einstellt.

Über Leitung 11 werden Signale von dem Eingangsblock 1 an eine Umschalteinheit 9 übermittelt, welche vorzugsweise nur während der Umschaltung aktiv ist (ein entsprechendes Aktivierungssignal wird von der Dual-Fuel-Einheit 4 über Leitung 10 übermittelt) und welcher über Leitung 8 auch Signale eines Klopfsensors 13 zugeführt werden.

Während der Umschaltung verwendet die Umschalteinheit 9 das Signal des Klopfsensors 13 um verschiedene Sachverhalte zu beurteilen:
- Ist das Gas-Luft-Gemisch mit einer gewünschten Luftüberschusszahl im betrachteten Zylinder angekommen?
- Steht das Signal des Klopfsensors 13 in Übereinstimmung mit einem Wert, welcher aufgrund der für die gewünschte Substitutionsrate vorzusehenden eingebrachte Menge an flüssigem Kraftstoff zu erwarten ist?
- Ist ein erster Klopfschwellwert überschritten?

Diese Beurteilung kann über Leitung 14 an die Dual-Fuel-Einheit 4 übermittelt werden. Alternativ kann die Beurteilung über Leitung 12 unmittelbar an die Verbrennungs-regeleinheit 6 übermittelt werden.

Kommt die Umschalteinheit 9 anhand der oben beschriebenen Logik zu dem Schluss, dass klopfreduzierende Maßnahmen zu treffen sind, übermittelt sie ein entsprechendes Signal über Leitung 12 an die Verbrennungsregeleinheit 6.

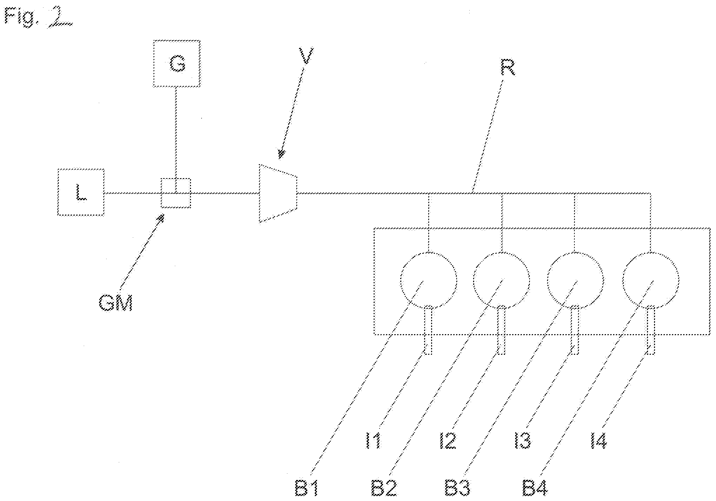

Fig. 2 zeigt schematisch den Aufbau einer erfindungsgemäßen Brennkraftmaschine.

Sie verfügt über hier exemplarisch vier Brennräume B1 bis B4, welchen über Injektoren I1 bis I4 flüssiger Kraftstoff - in diesem Fall Diesel - zuführbar ist. Die Einlassventile für das Gas-Luft-Gemisch sind nicht gezeigt.

Zur Herstellung des Gas-Luft-Gemisches ist ein zentraler Gasmischer GM vorgesehen, welcher mit einer Luftzufuhr L und einem Gasreservoir G, wie beispielsweise ein Tank, verbunden ist. Über eine Gas-Luft-Gemisch-Zufuhr R wird das in dem zentralen Gasmischer GM hergestellte Gas-Luft-Gemisch den Brennräumen B1 bis B4 zugeführt. Dem Gasmischer GM nachgeschaltet ist noch ein Verdichter V eines Turboladers vorgesehen (gemischaufgeladene Brennkraftmaschine). Der Gasmischer GM könnte aber auch nach dem Verdichter V in der Luftzufuhr angeordnet sein (luftaufgeladene Brennkraftmaschine). Die Anzahl der Brennräume B1 bis B4 ist rein beispielhaft.

Die Erfindung kann bei Dual-Fuel-Brennkraftmaschinen mit 2, 4, 6, 8, 10, 12, 14, 16, 18, 20, 22, 24 Brennräumen zum Einsatz kommen.

## Patentansprüche

1. Dual-Fuel-Brennkraftmaschine mit zumindest einem Brennraum (B), welche dazu ausgebildet ist, in einem Betriebsmodus mit primär flüssiger Kraftstoffzufuhr und in einem Betriebsmodus mit primär gasförmigem Kraftstoff, bei welchem der flüssige Kraftstoff als Pilotkraftstoff zum Initiieren der Verbrennung dient, betrieben zu werden, wobei dem zumindest einen Brennraum (B) ein Einlassventil für ein Gas-Luft-Gemisch (R) und ein Injektor (I1 bis I4) für flüssigen Kraftstoff zugeordnet ist und einer Regeleinrichtung, welche in einem Umschaltmodus dazu ausgebildet ist, eine Umschaltung dadurch vorzunehmen, dass
- eine dem zumindest einen Brennraum (B) durch das Gas-Luft-Gemisch (R) zugeführte Energiemenge geändert wird und
- eine eingespritzte Menge an flüssigem Kraftstoff und/oder ein Zeitpunkt der Einspritzung des flüssigen Kraftstoffs geändert wird, und
einem Sensor (13), dessen Signale charakteristisch sind für ein im zumindest einen Brennraum auftretendes Klopfen, wobei die Regeleinrichtung dazu ausgebildet ist, die Umschaltung unter Auswertung der Signale des Sensors (13) vorzunehmen, wobei die Regeleinrichtung dazu ausgebildet ist, die Auswertung der Signale des Sensors (13) unter Berücksichtigung der in den zumindest einen Brennraum eingespritzten Menge an flüssigem Kraftstoff vorzunehmen, **dadurch gekennzeichnet, dass** die Regeleinrichtung dazu ausgebildet ist, bei Auftreten von Klopfen über einem vorgegebenen ersten Klopfschwellwert klopfreduzierende Maßnahmen vorzunehmen, falls die eingespritzte Menge an flüssigem Kraftstoff unter einem vorgegebenen Flüssigkraftstoffschwellwert liegt und/oder dass die Regeleinrichtung dazu ausgebildet ist, bei Auftreten von Klopfen über einem vorgegebenen ersten Klopfschwellwert klopfreduzierende Maßnahmen nicht oder nur eingeschränkt vorzunehmen, falls die eingespritzte Menge an flüssigem Kraftstoff über einem vorgegebenen Flüssigkraftstoffschwellwert liegt und falls das Klopfen unterhalb eines vorgegebenen zweiten Klopfschwellwerts liegt.

2. Dual-Fuel-Brennkraftmaschine nach dem vorangehenden Anspruch, wobei die Regeleinrichtung dazu ausgebildet ist, einen Flüssigkraftstoffschwellwert in Abhängigkeit einer Substitutionsrate und einer Last der Brennkraftmaschine festzulegen, wobei die Substitutionsrate angibt, welcher Anteil der der Brennkraftmaschine zugeführten Energie in Form des gasförmigen Kraftstoffes zugeführt wird.

3. Dual-Fuel-Brennkraftmaschine nach wenigstens einem der vorangehenden Ansprüche, wobei eine Vielzahl von Flüssigkraftstoffschwellwerten, vorzugsweise in Abhängigkeit der Substitutionsrate, vorgesehen ist.

4. Dual-Fuel-Brennkraftmaschine nach wenigstens einem der vorangehenden Ansprüche, wobei die Regeleinrichtung dazu ausgebildet ist, die Auswertung der Signale des Sensors (13) unter Berücksichtigung der zugeführten Menge an flüssigem Kraftstoff derart vorzunehmen, dass unter zusätzlicher Berücksichtigung einer momentanen Last der Brennkraftmaschine eine Substitutionsrate berechnet wird.

5. Dual-Fuel-Brennkraftmaschine nach dem vorangehenden Anspruch, wobei die Regeleinrichtung dazu ausgebildet ist, bei Auftreten von Klopfen über einem vorgegebenen ersten Klopfschwellwert klopfreduzierende Maßnahmen vorzunehmen, falls die Substitutionsrate größer als ein vorgegebener Substitutionsratenschwellwert ist.

6. Dual-Fuel-Brennkraftmaschine nach wenigstens einem der vorangehenden Ansprüche, wobei die Regeleinrichtung dazu ausgebildet ist, die eingespritzte Menge an flüssigem Kraftstoff aus den Größen Einspritzbeginn, Einspritzdauer, Einspritzdruck zu berechnen.

7. Dual-Fuel-Brennkraftmaschine nach wenigstens einem der vorangehenden Ansprüche, wobei die Regeleinrichtung umfasst:
- einen Eingangsblock (1), dem Messsignale der Brennkraftmaschine zuführbar sind
- eine Dual-Fuel-Einheit (4), welche dazu ausgebildet ist, in Abhängigkeit einer gewünschten Substitutionsrate die hierfür erforderlichen Betriebsparameter der Brennkraftmaschine zu bestimmen und zu kontrollieren, ob Istwerte dieser Betriebsparameter mit Sollwerten übereinstimmen
- eine Verbrennungsregeleinheit (6), welche dazu ausgebildet ist, die Betriebsparameter der Brennkraftmaschine einzustellen
- eine Umschalteinheit (9)

8. Verfahren zum Umschalten einer Dual-Fuel-Brennkraftmaschine, welche dazu ausgebildet ist, in einem Betriebsmodus mit primär flüssiger Kraftstoffzufuhr und in einem Betriebsmodus mit primär gasförmigem Kraftstoff, bei welchem der flüssige Kraftstoff als Pilotkraftstoff zum Initiieren der Verbrennung dient, betrieben zu werden, bei welchem Umschalten
- eine zumindest einem Brennraum (B) durch ein Gas-Luft-Gemisch (R) zugeführte Energiemenge geändert wird und
- eine eingespritzte Menge an flüssigem Kraftstoff und/oder ein Zeitpunkt einer Einspritzung des flüssigen Kraftstoffs geändert wird,
wobei die Umschaltung unter Berücksichtigung von Signalen erfolgt, welche charakteristisch sind für ein im zumindest einen Brennraum (B) auftretenden Klopfen, wobei eine Auswertung der Signale unter Berücksichtigung der in den zumindest einen Brennraum eingespritzten Menge an flüssigem Kraftstoff erfolgt, **dadurch gekennzeichnet, dass** bei Auftreten von Klopfen über einem vorgegebenen ersten Klopfschwellwert zumindest eine klopfreduzierende Maßnahme vorgenommen wird, falls die eingespritzte Menge an flüssigem Kraftstoff unter einem vorgegebenen Flüssigkraftstoffschwellwert liegt und/oder dass bei Auftreten von Klopfen über einem vorgegebenen ersten Klopfschwellwert zumindest eine klopfreduzierende Maßnahme nicht oder nur eingeschränkt vorgenommen wird, falls die eingespritzte Menge an flüssigem Kraftstoff über einem vorgegebenen Flüssigkraftstoffschwellwert liegt und falls das Klopfen unterhalb eines vorgegebenen zweiten Klopfschwellwerts liegt.

## Claims

1. A dual-fuel internal combustion engine comprising at least one combustion chamber (B) which is adapted to be operated in an operating mode with primarily liquid fuel feed and in an operating mode with primarily gaseous fuel feed in which the liquid fuel serves as a pilot fuel for initiating combustion, wherein associated with the at least one combustion chamber (B) is an inlet valve for a gas-air mixture (R) and an injector (I1 to I4) for liquid fuel, and a control device which in a switch-over mode is adapted to effect a switch-over by
- an amount of energy supplied to the at least one combustion chamber (B) by the gas-air mixture being changed, and
- an injected amount of liquid fuel and/or a time of injection of the liquid fuel being changed, and
a sensor (13) whose signals are characteristic of a knock occurring in the at least one combustion chamber, wherein the control device is adapted to effect the switch-over with evaluation of the signals from the sensor (13), wherein the control device is adapted to effect evaluation of the signals of the sensor (13) having regard to the amount of liquid fuel injected into the at least one combustion chamber, **characterised in that** the control device is adapted upon the occurrence of knock above a predetermined first knock threshold value to effect knock-reducing measures if the injected amount of liquid fuel is below a predetermined liquid fuel threshold value and/or the control device is adapted upon the occurrence of knock above a predetermined first knock threshold value not to effect or only limitedly to effect knock-reducing measures if the injected amount of liquid fuel is above a predetermined liquid fuel threshold value and if the knock lies below a predetermined second knock threshold value.

2. A dual-fuel internal combustion engine according to the preceding claim wherein the control device is adapted to establish a liquid fuel threshold value in dependence on a substitution rate and a load of the internal combustion engine, wherein the substitution rate specifies what proportion of the energy fed to the internal combustion engine is fed in the form of the gaseous fuel.

3. A dual-fuel internal combustion engine according to at least one of the preceding claims wherein a plurality of liquid fuel thresholds values is provided, preferably in dependence on the substitution rate.

4. A dual-fuel internal combustion engine according to at least one of the preceding claims wherein the control device is adapted to effect evaluation of the signals of the sensor (13) having regard to the fed amount of liquid fuel in such a way that a substitution rate is calculated having additional regard to a current load of the internal combustion engine.

5. A dual-fuel internal combustion engine according to the preceding claim wherein the control device is adapted to effect knock-reducing measures upon the occurrence of knock above a predetermined first knock threshold value if the substitution rate is greater than a predetermined substitution rate threshold value.

6. A dual-fuel internal combustion engine according to at least one of the preceding claims wherein the control device is adapted to calculate the injected amount of liquid fuel from the variables injection start, injection duration and injection pressure.

7. A dual-fuel internal combustion engine according to at least one of the preceding claims wherein the control device comprises:
- an input block (1) to which measurement signals of the internal combustion engine can be supplied,
- a dual-fuel unit (4) which is adapted in dependence on a desired substitution rate to determines the operating parameters required for that of the internal combustion engine and to check whether actual values of the operating parameters correspond to target values,
- a combustion control unit (6) adapted to adjust the operating parameters of the internal combustion engine, and
- a switch-over unit (9).

8. A method of switching over a dual-fuel internal combustion engine which is adapted to be operated in an operating mode with primarily liquid fuel feed and in an operating mode with primarily gaseous fuel feed in which the liquid fuel serves as a pilot fuel for initiating combustion, upon which switch-over
- an amount of energy supplied to the at least one combustion chamber (B) by the gas-air mixture is changed, and
- an injected amount of liquid fuel and/or a time of injection of the liquid fuel is changed,
wherein the switch-over is effected having regard to signals which are characteristic for knock occurring in the at least one combustion chamber (B), wherein evaluation of the signals is effected having regard to the amount of liquid fuel injected into the at least one combustion chamber, **characterised in that** upon the occurrence of knock above a predetermined first knock threshold value at least one knock-reducing measure is effected if the injected amount of liquid fuel is below a predetermined liquid fuel threshold value and/or upon the occurrence of knock above a predetermined first knock threshold value at least one knock-reducing measure is not effected or only limitedly effected if the injected amount of liquid fuel is above a predetermined liquid fuel threshold value and if the knock lies below a predetermined second knock threshold value.

## Revendications

1. Moteur à combustion interne bi-carburant avec au moins un espace de combustion (B) qui est réalisé afin d'être mis en fonctionnement dans un mode de fonctionnement avec une amenée de carburant liquide primaire et dans un mode de fonctionnement avec du carburant gazeux primaire, pour lequel le carburant liquide sert de carburant pilote pour l'initiation de la combustion, dans lequel une soupape d'admission pour un mélange de gaz et d'air (R) et un injecteur (I1 à I4) pour du carburant liquide sont associés à l'au moins un espace de combustion (B) et à un dispositif de régulation qui est réalisé dans un mode de commutation afin d'entreprendre une commutation selon laquelle
- une quantité d'énergie amenée à l'au moins un espace de combustion (B) par le mélange de gaz et d'air (R) est modifiée et
- une quantité de carburant liquide injectée et/ou un moment de l'injection du carburant liquide est modifié, et
un capteur (13), dont les signaux sont caractéristiques d'un cliquetis survenant dans au moins un espace de combustion, dans lequel le dispositif de régulation est réalisé afin d'entreprendre la commutation par évaluation des signaux du capteur (13), dans lequel le dispositif de régulation est réalisé afin d'entreprendre l'évaluation des signaux du capteur (13) en tenant compte de la quantité de carburant liquide injectée dans l'au moins un espace de combustion, **caractérisé en ce que** le dispositif de régulation est réalisé afin d'entreprendre, lors de la survenue de cliquetis, des mesures réduisant le cliquetis au-dessus d'une première valeur seuil de cliquetis prescrite, si la quantité de carburant liquide injectée se trouve en dessous d'une valeur seuil de carburant liquide prescrite et/ou que le dispositif de régulation est réalisé afin de ne pas entreprendre ou seulement de manière limitée, lors de la survenue de cliquetis, des mesures réduisant le cliquetis au-dessus d'une première valeur seuil de cliquetis prescrite, si la quantité de carburant liquide injectée se trouve au-dessus d'une valeur seuil de carburant liquide prescrite et si le cliquetis se trouve en dessous d'une deuxième valeur seuil de cliquetis prescrite.

2. Moteur à combustion interne bi-carburant selon la revendication précédente, dans lequel le dispositif de régulation est réalisé afin de fixer une valeur seuil de carburant liquide en fonction d'un taux de substitution et d'une charge du moteur à combustion interne, dans lequel le taux de substitution indique la part de l'énergie amenée au moteur à combustion interne qui est amenée sous la forme du carburant gazeux.

3. Moteur à combustion interne bi-carburant selon au moins l'une des revendications précédentes, dans lequel une pluralité de valeurs seuil de carburant liquide est prévue, de préférence en fonction du taux de substitution.

4. Moteur à combustion interne bi-carburant selon au moins l'une des revendications précédentes, dans lequel le dispositif de régulation est réalisé afin d'entreprendre l'évaluation des signaux du capteur (13) en tenant compte de la quantité de carburant liquide amenée de telle manière qu'en tenant compte en outre d'une charge momentanée du moteur à combustion interne, un taux de substitution soit calculé.

5. Moteur à combustion interne bi-carburant selon la revendication précédente, dans lequel le dispositif de régulation est réalisé afin d'entreprendre, lors de la survenue de cliquetis, des mesures réduisant le cliquetis au-dessus d'une première valeur seuil de cliquetis prescrite si le taux de substitution est supérieur à une valeur seuil de taux de substitution prescrite.

6. Moteur à combustion interne bi-carburant selon au moins l'une des revendications précédentes, dans lequel le dispositif de régulation est réalisé afin de calculer la quantité de carburant liquide injectée à partir des grandeurs début d'injection, durée d'injection, pression d'injection.

7. Moteur à combustion interne bi-carburant selon au moins l'une des revendications précédentes, dans lequel le dispositif de régulation comporte :
- un bloc d'entrée (1) auquel des signaux de mesure du moteur à combustion interne peuvent être amenés,
- une unité bi-carburant (4) qui est réalisée afin de déterminer en fonction d'un taux de substitution souhaité les paramètres de fonctionnement du moteur à combustion interne nécessaires à cet effet et de contrôler si des valeurs réelles de ces paramètres de fonctionnement coïncident avec des valeurs de consigne,
- une unité de régulation de combustion (6) qui est réalisée afin de régler les paramètres de fonctionnement du moteur à combustion interne,
- une unité de commutation (9).

8. Procédé de commutation d'un moteur à combustion interne bi-carburant qui est réalisé afin d'être mis en fonctionnement dans un mode de fonctionnement avec une amenée de carburant liquide primaire et dans un mode de fonctionnement avec du carburant gazeux primaire, pour lequel le carburant liquide sert de carburant pilote pour l'initiation de la combustion, lors de laquelle commutation
- une quantité d'énergie amenée à au moins un espace de combustion (B) par un mélange de gaz et d'air (R) est modifiée et
- une quantité de carburant liquide injectée et/ou un moment d'une injection du carburant liquide est modifié,
dans lequel la commutation est effectuée en tenant compte de signaux qui sont caractéristiques d'un cliquetis survenant dans au moins un espace de combustion (B), dans lequel une évaluation des signaux est effectuée en tenant compte de la quantité de carburant liquide injectée dans l'au moins un espace de combustion, **caractérisé en ce que** lors de la survenue de cliquetis, au moins une mesure réduisant le cliquetis au-dessus d'une première valeur seuil de cliquetis prescrite est entreprise, si la quantité de carburant liquide injectée se trouve en dessous d'une valeur seuil de carburant liquide prescrite et/ou que lors de la survenue de cliquetis, au moins une mesure réduisant le cliquetis au-dessus d'une première valeur seuil de cliquetis prescrite n'est pas entreprise ou seulement de manière limitée, si la quantité de carburant liquide injectée se trouve au-dessus d'une valeur seuil de carburant liquide prescrite et si le cliquetis se trouve en dessous d'une deuxième valeur seuil de cliquetis prescrite.
